# EUROPEAN PATENT SPECIFICATION

(11) **EP 1 629 136 B1**
(45) Date of publication and mention of the grant of the patent: **20.07.2011**
(21) Application number: 03816861.3
(22) Date of filing: 25.09.2003
(51) Int. Cl.: C23C 18/02, C23C 18/12, C09D 5/00, C09D 5/08, C09D 183/04, C08G 77/04, B05D 7/14

(54) **COMPOSITION FOR COATING METALS TO PROTECT AGAINST CORROSION**
ZUSAMMENSETZUNG ZUR BESCHICHTUNG VON METALLEN ALS KORROSIONSSCHUTZ
COMPOSITION DE REVETEMENT DE METAUX POUR LA PROTECTION CONTRE LA CORROSION

(30) Priority: 09.05.2003 DE 10320765
(43) Date of publication of application: 01.03.2006
(73) Proprietor: Evonik Degussa GmbH, 45128 Essen (DE)
(72) Inventor: ALBERT, Philipp, 79539 Lörrach (DE); MÜH, Ekkehard, 79115 Freiburg (DE); JUST, Eckhard, 79618 Rheinfelden (DE); KRÄNZLER, Thomas, 88682 Salem (DE)
(86) International application number: PCT/EP2003/010654
(87) International publication number: WO 2004/099465

(56) References cited:
- EP-A- 0 358 338
- EP-A- 0 404 411
- EP-A- 1 215 252
- EP-A- 1 215 253
- DE-A- 4 205 819
- US-A1- 2001 032 568

## Description

The present invention relates to a composition based on silanes for coating metal to protect against corrosion, to its preparation and use.

Anti-corrosion compositions for metals and also adhesion promoters (referred to hereinbelow as primers) based on organosilanes or SiO₂ sol have been known for a long time and have been described in diverse form. Unfortunately the known systems still leave something to be desired.

Common methods of producing anti-corrosion layers on metallic surfaces include chromating, phosphating, coating, and anodizing.

The industrial significance of chromating is at the present time continuing to decline owing to toxicological problems and corresponding reclassification of the chromates (EU Directive 2000/53/EC). Despite the good corrosion protection properties of chromating, therefore, the development of new, chromium-free systems is of generally high interest.

Methods of phosphating iron, steel, zinc, and aluminum have long been state of the art. Phosphating in combination with a coating is enough to afford an entirely acceptable protection against corrosion, whereas the two systems alone do not lead to the desired results.

Electrolytically produced protective oxide films on metals, such as aluminum or titanium, despite affording adequate protection against corrosion, exhibit brittleness as the thickness of the oxide film increases, and require a large amount of energy for their production.

Present developments are attempting to deposit perfect monolayer films on the metal surfaces, or are working with conversion coats of cerium [Galvanotechnik 92 (12), 2001, 3243].

Further approaches to avoiding chromates(VI) are formulations which contain chromium(III) and which therefore cannot be considered to be free of heavy metals.

Different anti-corrosion systems containing silicon compounds are known (e.g. EP 1 215 253, EP 1 215 252).

Eco-friendly anti-corrosion layers can be obtained with silanes and silane-based sol-gel condensates (US 5 200 275). For the coating of the surfaces the metal substrates are first degreased and cleaned. The cleaning steps may include treatment with organic solvents and also alkaline and acidic pickling operations [Metalloberfläche, 29 (10), 1975, 517]. The silanes are hydrolyzed in aqueous or at least water-containing solutions and then contacted with the metal surface by immersion, spraying and/or spin coating application. Curing or condensation takes place in air at room temperature or elevated temperature. The film thicknesses achieved are normally between 10 and 100 nm (US 5 750 197).

Sol-gel systems (also referred to hereinbelow as sol) are prepared by means of an acidic or basic catalyst from hydrolyzable silicon compounds, often in combination with corresponding Al, Ti and/or Zr precursors (e.g. DE 42 05 819, EP 0 358 338). For this purpose the silanes are hydrolyzed together in a solvent, the solvent generally being an alcohol which is also formed during the hydrolysis of the compounds. The coating composition can be applied to the metallic substrates again by a coating method already mentioned above. The coating composition is applied preferably in dry film thicknesses of from 1 to 50 µm without any final coating with a topcoat material being envisaged (DE 198 13 709).

Example 14 from US 2001/032 568 discloses the preparation of a coating composition by mixing methyltrimethoxysilane, aminoethylaminopropyltrimethoxy-silane, isopropyl alcohol, and water. After standing for 90 minutes, the resulting coating composition is applied to steel and aluminium coupons. Further such basic compositions may be stabilized by adding, for example, acetic acid, chromiumacetatehydroxide, 3-glycidloxypropyltrimethoxysilane, phenyltrimethoxysilane.

EP 1 130 066 discloses corrosion-protected metal surfaces which are pretreated with a silane composition and subsequently extrusion coated with a polyamide compound. The water- and alcohol-containing composition employed is based, inter alia, on hydrolyzates, condensates and/or cocondensates, starting from alkoxysilanes Q which carry functional groups, such as aminoalkylalkoxysilanes, and alkoxysilanes M, such as alkylalkoxysilanes, alkenylalkoxysilanes and tetraalkoxysilanes, the sum of components M and Q being present in a molar ratio of 0 ≤ M/Q < 20.

It is an object of the present invention to provide a further composition for producing a film on a metallic surface for protection against corrosion. A particular concern was to protect specifically the surface of aluminum or an aluminum alloy against corrosion by means of a coating. A further concern was to find a highly effective and nevertheless eco-friendly solution.

This object is achieved in accordance with the invention as per the details in the patent claims.

Surprisingly it has been found that the morphology of hydrophobic sol coatings can be enhanced by adding small amounts of a hydrophilic component. While the coatings constructed only from hydrophobic components exhibit pores, the addition of small amounts of a hydrophilic compound, especially aminosilanes, makes it possible to produce highly coherent films which have a low pore content or are pore-free. The hydrophilic component is appropriately added to the coating sol only at very low concentrations, ≤ 1.0 % by weight, based on the SiO₂ content of the sol, since otherwise the film swells in aqueous media and corrosion may occur.

The mode of action of the present teaching can also be recognized from the fact that, in a system having a relatively high pore content, simply increasing the film thickness does indeed increase the electrical volume resistance, but the porosity is maintained.

Coatings for protecting metals against corrosion, obtainable using a composition of the invention, are generally very thin, hydrophobic, transparent films with a barrier effect. They constitute in particular an especially effective barrier film for electrolyte solutions and so advantageously bring about passive protection for metals against corrosion, especially for aluminum and aluminum alloys.

Coatings obtained using the present composition are further outstandingly suitable for primer applications and can be coated - either directly or following further treatment with a corresponding functional silane - with an additional topcoat and/or color coating material. At least one functional group of the silane should preferably be chosen so that chemical attachment to the coating material can take place: suitably, aminosilanes for urethane or epoxy coating materials, such as 3-aminopropyltrimethoxysilane or else 3-glycidyloxypropyltrialkoxysilanes, and silanes containing double bonds, such as 3-methacryloyloxypropyltrialkoxysilane or vinyltrialkoxysilanes, for free-radically curing coating systems, alkoxy here and below preferably being methoxy, ethoxy, propoxy, butoxy or 2-methoxyethoxy.

With such a coating, obtainable using the composition of the invention, it is observed in a corrosion test, particularly in the case of aluminum, that there is virtually no "scribe creep", or corrosive migration beneath the coating material starting from the scribe mark. Accordingly, through the formation of very thin barrier films, the coatings of the invention afford good passive protection against corrosion. This inventively thin anti-corrosion layer also effects astonishingly good coverage of rough surfaces, such as mechanically ground aluminum sheets, for example. Consequently, films of this kind may replace not only chromating but also the cathodic electrocoating which normally follows.

The sol-gel coating of the invention can likewise be used as a stable carrier system for other and/or further silane-based coating systems, such as perfluoroalkylsilane films which repel water and dirt, using for-example, inter alia, tridecafluoro-1,2,2-tetrahydrooctyltriethoxysilanes, corresponding formulations, condensates or cocondensates, such as may also be found in EP 0 838 467 B1, EP 0 846 717 B1, EP 0 846 716 B1, EP 1 033 395 A2 and EP 1 101 787 A2.

The advantages of the present composition and of the substantially pore-free coatings obtained using the composition are as follows:
- outstanding protection against corrosion on metal surfaces even at film thicknesses below 1 µm and even without a further coating system;
- extremely high electrical volume resistances;
- comparatively eco-friendly composition;
- the possibility to avoid chromating;
- simple and economic application of the composition;
- effective coating, both mechanically and chemically, and also, in particular, under the influence of humidity in conjunction with salt;
- particularly good adhesion to metal and to other coatings, such as paint or polymer coatings.

The present invention accordingly provides a composition for coating metals to protect against corrosion, comprising
(i) a sol based on silicon compounds, where the sol is obtainable by controlled hydrolysis involving at least one alkoxysilane, acid, water, and optionally alcohol, which corresponds to the alkoxy group of the alkoxysilane employed,
(ii) at least one aminoalkyl-functional alkoxysilane and/or
(iii) at least one reaction product of components (i) and (ii),
the amount of aminoalkyl-functional silane component from (ii) and (iii) being in total from 0.01 to 1.0 % by weight, calculated as the particular aminoalkylalkoxysilane used and based on the SiO₂ content of the sol (i) before any reaction between (i) and (ii) has taken place or before the sol has been combined with the other compounds (ii) or (iii).

The amount of aminoalkyl-functional silane component from (ii) and (iii) in the composition of the invention is preferably from 0.02 to 0.08 % by weight, more preferably from 0.04 to 0.08 % by weight, and very preferably from 0.06 to 0.08 % by weight, calculated as the particular aminoalkylalkoxysilane employed and based on the SiO₂ content of the sol (i) before any reaction between (i) and (ii) has taken place or before the sol has been combined with the other compounds (ii) or (iii). The composition of the invention suitably includes at least one aminoalkyl-functional alkoxysilane from the group consisting of 3-aminopropyltrimethoxysilane, 3-aminopropyltriethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, N,N-di(2-aminoethyl)-3-aminopropyltrimethoxysilane, N,N-di(2-aminoethyl)-3-aminopropyltriethoxysilane, N-[N'-(2-aminoethyl)-2-aminoethyl)]-3-aminopropyltrimethoxysilane, N-[N'-(2-aminoethyl)-2-aminoethyl)]-3-aminopropyltriethoxysilane, N-methyl-3-aminopropyltrimethoxysilane, N-methyl-3-aminopropyltriethoxysilane, N-(n-butyl)-3-aminopropyltrimethoxysilane, N-(n-butyl)-3-aminopropyltriethoxysilane, N-cyclohexyl-3-aminopropyltrimethoxysilane, N-cyclohexyl-3-aminopropyltriethoxysilane, N-phenyl-3-aminopropyltrimethoxysilane, 3-aminopropylmethyldimethoxysilane, 3-aminopropylmethyldiethoxysilane, bis(3-trimethoxysilylpropyl)amine, and bis(3-triethoxysilylpropyl)amine.

In the composition of the invention the amount of component (i) is preferably from 0.25 to 40% by weight, more preferably from 5 to 30% by weight, very preferably from 8 to 25% by weight, and in particular from 10 to 15% by weight, calculated as SiO₂ and based on the overall makeup of the composition, all of the constituents of the composition adding up to 100% by weight.

The composition of the invention further preferably includes water, methanol, ethanol, isopropanol, butanol, methoxypropanol, butylglycol, or a mixture of at least two of the aforementioned solvents/diluents. Thus the amount of solvent/diluent in the composition of the invention can be from 1 to 99% by weight, preferably from 15 to 80% by weight, more preferably from 30 to 50% by weight, the amount being based on the overall makeup of the present composition.

The composition of the invention may further comprise at least one corrosion inhibitor, examples being inorganic corrosion inhibitors based on borates, phosphorus silicates, and zirconium complexes, or organic corrosion inhibitors, such as ammonium benzoate, benzothiazolylthiosuccinic acid or ammonium salts of fatty acids, to name but a few. The composition of the invention appropriately contains from 0.05 to 20% by weight, preferably from 0.5 to 10% by weight, in particular from 1 to 5% by weight of corrosion inhibitor, the amount being based on the overall makeup of the present composition.

The composition of the invention may also include at least one organic resin and/or at least one polymer, examples being bisphenol A, epoxy resins, such as bisphenol A diglycidyl ether, and polyesters, polyacrylates, polyethers or polyurethanes.

The composition of the invention preferably contains from 0.05 to 20% by weight, more preferably from 0.5 to 10% by weight, very preferably from 1 to 5% by weight of resin, polymer or a mixture of resin and polymer, the amount being based on the overall makeup of the present composition.

The present invention further provides a process for preparing a composition of the invention for coating metal to protect against corrosion, said process comprising
- in the first step producing a sol from at least one alkoxysilane in a conventional manner, where the sol is obtainable by controlled hydrolysis at least one alkoxysilane, acid, water, and optionally alcohol, which corresponds to the alkoxy group of the alkoxysilane employed,
- in the second step adding to the sol from the first step at least one aminoalkyl-functional alkoxysilane in an amount of from 0.01 to 1.0 % by weight, calculated as the particular aminoalkylalkoxysilane employed and based on the SiO₂ content of the sol that is used, and further adding, if desired, a diluent and, if desired, water.

In the first step it is preferred to employ at least one alkoxysilane from the group consisting of tetramethoxysilane, methyltrimethoxysilane, propyltrimethoxysilane, isopropyltrimethoxysilane, octyltrimethoxysilane, hexadecyltrimethoxysilane, octadecyltrimethoxysilane, tetraethoxysilane, methyltriethoxysilane, propyl-triethoxysilane, isopropyltriethoxysilane, octyltriethoxysilane, hexadecyl-triethoxysilane, and octadecyltriethoxysilane or a mixture of at least two of the aforementioned alkoxysilanes.

For the preparation of the sol the alkoxysilane is subjected to controlled hydrolysis and the hydrolyzate is reacted to form the sol, where appropriate with thorough mixing. The reaction can be conducted where appropriate in the presence of a hydrolysis catalyst, such as an organic or mineral acid, for example, such as acetic acid, citric acid or phosphoric acid, sulfuric acid or nitric acid, or a base, such as sodium methoxide, sodium ethoxide, sodium hydroxide, potassium hydroxide, ammonia or organic amines, such as alkylamines, for example. The hydrolysis catalyst can be introduced in a mixture with the water that is used here for the hydrolysis. It is also possible to add a diluent/solvent to the hydrolysis mixture or to the resultant sol, said diluent/solvent being, for example, an alcohol which corresponds to the alkoxy group of the alkoxysilane employed.

Preparation of the sol is suitably carried out with thorough mixing of the reaction batch. The sol is preferably adjusted to a pH of from 1 to 5 by addition of one of the abovementioned acids.

A sol can be obtained, for example, from 50 to 100 parts by weight of at least one alkoxysilane, selected for example from methyltrialkoxysilane and/or tetraalkoxysilane, 0.01 to 5 parts by weight of acid, phosphoric acid for example, 5 to 150 parts by weight of water and, if desired, 10 to 200 parts by weight of alcohol, ethanol for example, hydrolysis and subsequent reaction being carried out appropriately with stirring at a temperature of from 10 to 80°C over a period of from 10 minutes to 5 days.

In the process of the invention the aminoalkylalkoxysilane is then added to the sol from the first step. The batch, appropriately, is mixed thoroughly.

It is further preferred in the second step to add water in an amount of from 0.001 to 100 parts by weight, more preferably from 1.0 to 50 parts by weight, very preferably from 2.0 to 10 parts by weight, per 100 parts by weight of sol from the first step.

Moreover it is possible in the second step to add at least one solvent/diluent from the group consisting of methanol, ethanol, isopropanol, butanol, methoxypropanol, and butylglycol in an amount of from 0.001 to 10 000 parts by weight, preferably from 50 to 900 parts by weight, more preferably from 100 to 300 parts by weight, per 100 parts by weight of sol from the first step.

The process of the invention is generally conducted in such a way that an aqueous and alcohol-containing sol is prepared on the basis of alkoxysilanes in a conventional manner, an aminoalkylalkoxysilane is added, and the mixture is reacted.

The product mixture obtained in the second step is suitably reacted additionally at a temperature in the range from 10 to 60°C, preferably from 20 to 30°C, for from 1 minute to 24 hours, preferably from 10 to 60 minutes, with thorough mixing.

A preparation obtained in this way, which is generally clear or opalescent to milky, can then be used, as obtained or in diluted form, as a composition for coating metal surfaces to protect against corrosion. To this end, the metal surface to be coated can be precleaned, mechanically for example by abrasion or chemically by etching, after which the composition of the invention can be applied, by dipping, brushing, spraying or knife coating, for example. The metal surface thus treated is appropriately dried thermally, preferably at up to 220°C, in particular at up to 200°C, which generally produces a hard and clear coating which adheres well to the metal.

Accordingly, the present invention likewise provides for the use of a composition of the invention as an anti-corrosion composition for a metal from the group consisting of aluminum, aluminum alloys, magnesium, magnesium alloys, zinc, zinc alloys, titanium, titanium alloys, iron, iron alloys, galvanized iron sheet, galvanized iron alloy, tin, tin alloys, copper, copper alloys, and silver and silver alloys.

The invention further provides a method for the use of a composition of the invention by applying the composition to the optionally cleaned and/or pretreated metal surface, drying and/or curing the applied film, and, if desired, applying one or more paint and/or polymer layers to the coating thus obtained.

The invention additionally provides for the use of a composition of the invention by applying the composition to an optionally cleaned and/or pretreated metal surface, drying and/or curing it, applying to the anti-corrosion layer thus produced a silane-based adhesion promoter, based preferably on an aminosilane, a glycidyloxyalkylsilane, an acryloylsilane, a vinylsilane or a corresponding mixture thereof, drying the applied adhesion promoter (primer), and applying to the coating thus obtained one or more paint and/or polymer layers, such as color coating material and also topcoat materials. The primer is preferably selected from the group consisting of 3-aminopropyltrimethoxysilane, 3-aminopropyltriethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, N,N-di(2-aminoethyl)-3-aminopropyltrimethoxysilane, N,N-di(2-aminoethyl)-3-aminopropyltriethoxysilane, N-[N'-(2-aminoethyl)-2-aminoethyl)]-3-aminopropyltrimethoxysilane, N-[N'-(2-aminoethyl)-2-aminoethyl)]-3-aminopropyltriethoxysilane, N-methyl-3-aminopropyltrimethoxysilane, N-methyl-3-aminopropyltriethoxysilane, N-(n-butyl)-3-aminopropyltrimethoxysilane, N-(n-butyl)-3-aminopropyltriethoxysilane, N-cyclohexyl-3-aminopropyltrimethoxysilane, N-cyclohexyl-3-aminopropyltriethoxysilane, N-phenyl-3-aminopropyltrimethoxysilane, 3-aminopropylmethyldimethoxysilane, 3-aminopropylmethyldiethoxysilane, bis(3-trimethoxysilylpropyl)amine, and bis(3-triethoxysilylpropyl)amine, in which case the aminosilane can suitably be used as an alcoholic and/or aqueous primer solution having an aminosilane content of from 0.001 to 10% by weight, based on the solution. When employing a polyurethane or epoxy coating material it is additionally possible to use β-(3,4-epoxycyclohexyl)ethyltrimethoxysilane, 3-glycidyloxypropyltrimethoxy-silane or 3-glycidyloxypropyltriethoxysilane as primer or adhesion promoter. Additionally, for free-radically curing coating materials, the adhesion promoter employed may advantageously be 3-methacryloyloxypropyltrimethoxysilane, vinyltrimethoxysilane, vinyltriethoxysilane or a mixture thereof.

The composition of the invention can be used to advantage in particular in automobile construction, in mechanical engineering, in ship building, in aircraft construction, or for house construction components.

The invention accordingly provides a novel composition which advantageously allows the coating of metals to protect against corrosion. In particular the composition of the invention allows the protection of aluminum and aluminum alloys against corrosion, the anti-corrosion layer produced in accordance with the invention possessing excellent adhesion directly to the metallic substrate and, with the further possibility of applying additional layers having outstanding adhesion or further particular properties, such as hydrophobicity and oleophobicity, to said anti-corrosion layer in a simple and economical way.

The present invention is illustrated by the following examples, without restriction of its subject matter.

### Examples

### Example 1

### 1.1 Preparation of the coating formulation:

120 g of tetraethoxysilane (DYNASIL^{®} A) and 300 g of methyltriethoxysilane (DYNASYLAN^{®} MTES) were charged to a four-necked flask with mechanical stirrer, reflux condenser, dropping funnel, and thermometer. With intensive stirring, 42 g of deionized water were added dropwise over the course of 5 minutes and the mixture was diluted with 138 g of isopropanol. The pH was adjusted to 3.5 using phosphoric acid. The mixture, which was cloudy to start with, was stirred for a further 5 hours. This gave a clear sol.

The concentrated sol was divided into portions, each of which was mixed as per table 1 with N-butylaminopropyltrimethoxysilane (DYNASYLAN^{®} 1189), diluted with isopropanol, activated with deionized water, and stirred for 30 minutes.

**Table 1 Composition of coating formulations 1A to 1 E**

| Sample designation | Coating sol from 1.1 [g] | DYNASYLAN^{®} 1189 [g] | Isopropanol [g] | Water [g] |
|---|---|---|---|---|
| A | 100.00 | 0.0 | 95 | 5 |
| B | 90.00 | 10.00 | 95 | 5 |
| C | 99.50 | 0.50 | 95 | 5 |
| D | 99.90 | 0.10 | 95 | 5 |
| E | 99.95 | 0.05 | 95 | 5 |
| F^{*)} | 0 | 2 | 198 | 0 |

| | | | | |
|---|---|---|---|---|
| ^{*)}: The solution was adjusted to a pH of 4 using acetic acid. | | | | |

### 1.2 Cleaning of the metals:

All metal sheets were degreased with organic solvents, pickled in dilute (10%) alkaline cleaning solution (CARELA^{®} SP, R. Späne GmbH) at 70°C for 10 to 20 seconds, and then rinsed off with deionized water. The sheets were further pickled for 5 minutes in dilute (0.0016 mol/l) nitric acid, rinsed with deionized water, and dried.

### 1.3 Application of the coatings:

Test sheets (aluminum alloy 6016: AlMg_{0.4} Si_{1.2}) cleaned according to 1.2 were immersed in the activated coating sols A to E and also in solution F for 5 minutes. The sheets were stood up vertically to allow excess sol to drip off. After brief initial drying at room temperature, curing took place at 200°C for 10 minutes. This gave a transparent coating with a thickness of less than 1 µm. Thereafter the sheets were referred to as 1A to 1F, depending on the coating solution. Specimen 1A(2) was coated again with the coating sol A.

### 1.4 Testing of the sheets:

The sheets 1A to 1F coated in accordance with 1.3 were stored in oxidizing corrosion solutions (solution of NaCl and H₂O₂ in DI water as per DIN 50 905) in closed corrosion chambers at 50°C. The corrosion solution was replaced each day. Uncoated sheets were also subjected to the corrosion test, as comparison specimens.

While the coated sheets showed no surface attack, severe oxidation occurred on the untreated comparison specimen after just a few days in the corrosion solution. Even after 30 days in the corrosion solution the metal sheet coated with solution E showed only slight surface corrosion. It was followed, in a graded evaluation made on the basis of inspection, by the metal sheets with the barrier layers D, A, C, B, and F; cf. table 1.

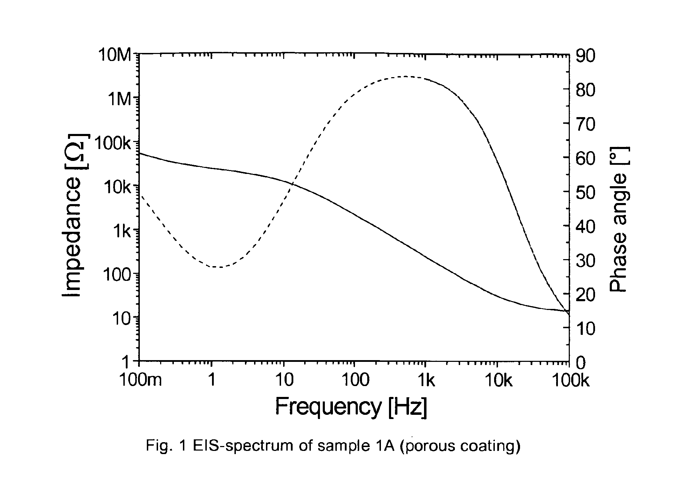

The quality of the coating on the sheets coated according to 1.3 was further investigated by electrochemical impedance spectroscopy (EIS) [Mansfeld, F., "Electrochemical Impedance Spectroscopy (EIS) as a New Tool for Investigation Methods of Corrosion Protection", Electrochimica Acta 35 (10), pages 1533 to 1544, 1990]. The impedance of the coating on the sheet was measured at different alternating current frequencies. Figure 1 shows the plot for specimen 1A. From the low initial volume resistance and the course of the phase angle plot (dashed line) it is evident to the skilled worker that the coating is porous. Specimen 1 A(2), which was coated twice with solution A, did exhibit increased impedance values in accordance with the increased film thickness, but still exhibited the phase angle plot course characteristic of porous films. There was no change in the spectra of these specimens after storage in salt water for 2 days.

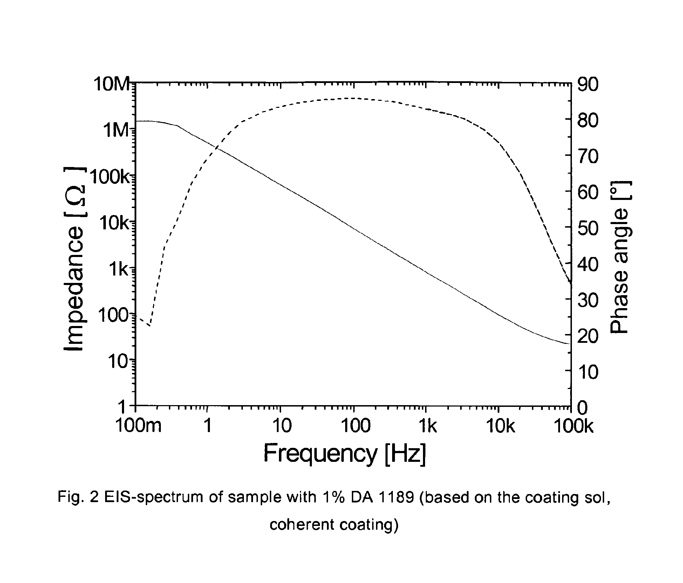

The addition of the hydrophilic aminosilane component produced a marked change in the course of the plot. Figure 2 shows the plot course of a specimen coated with 1% by weight DYNASYLAN^{®} 1189 (based on the coating sol). From the increased initial volume resistance and the course of the phase angle plot (dashed line) it is evident to the skilled worker that this is a much more coherent coating, with few pores. However, when exposed in aqueous solutions, this coating swelled, with a reduction in the volume resistance. If the chosen concentration of hydrophilic aminosilane was sufficiently low, it was possible to set an optimum in terms of high volume resistances and low swellability.

### Example 2

### 2.1 Application of the coatings:

Untreated metal test sheets (aluminum alloy 6016: AlMg_{0.4}Si_{1.2}) and superficially abraded aluminum sheets of the same alloy were cleaned as in 1.2. Untreated aluminum sheets were immersed for 5 minutes in the activated coating sol E, while superficially abraded aluminum sheets were immersed in the activated coating sol A. The sheets were stood up vertically to allow excess sol to drip off. After brief initial drying at room temperature, curing was carried out at 200°C for 10 minutes. To promote adhesion, the sheets were coated a second time with the solution F (primer). The duration of immersion and drying procedure were analogous to those of the 1st coating step. The overall film thickness of the silane system was less than 1 µm. For better comparison, sheets were also coated only with solution F and dried at 200°C for 10 minutes.

The silane-coated metal sheets were painted with a 2-component polyurethane varnish (Standox GmbH) and dried at 60°C for 60 minutes. The thickness of the varnish layer was approximately 25 µm.

### 2.2 Testing of the metal sheets:

After 240 hours' exposure to the salt spray mist conditions (CASS-Test, DIN 50 021) the scribe creep was 0.09 mm for the sheets coated with E, 0.17 mm for the abraded sheets coated with A, and 0.41 mm for the sheets coated only with F. According to the CASS test, unsilanized, varnished comparison sheets showed a scribe creep of 2.65 mm. Varnished aluminum sheets with yellow chromating, which were likewise tested, showed a scribe creep of 0.70 mm.

Therefore, in comparison with the other varnish-coated metal sheets, sheets E exhibit virtually no creep and thus give the best result under testing.

## Claims

1. A composition for coating metals to protect against corrosion, comprising
(i) a sol based on silicon compounds, where the sol is obtainable by controlled hydrolysis involving at least one alkoxysilane, acid, water, and optionally alcohol, which corresponds to the alkoxy group of the alkoxysilane employed,
(ii) at least one aminoalkyl-functional alkoxysilane and/or
(iii) at least one reaction product of components (i) and (ii),
the amount of aminoalkyl-functional silane component from (ii) and (iii) being in total from 0.01 to 1.0 % by weight, calculated as the particular aminoalkylalkoxysilane used and based on the SiO₂ content of the sol (i) before any reaction between (i) and (ii) has taken place or before the sol has been combined with the other compounds (ii) or (iii).

2. The composition as claimed in claim 1, containing from 0.02 to 0.08 % by weight of aminoalkyl-functional silane component from (ii) and (iii), calculated as the particular aminoalkylalkoxysilane employed and based on the SiO₂ content of the sol (i) before any reaction between (i) and (ii) has taken place or before the sol has been combined with the other compounds (ii) or (iii).

3. The composition as claimed in claim 1 or 2, comprising at least one aminoalkyl-functional alkoxysilane from the group consisting of 3-aminopropyltrimethoxysilane, 3-aminopropyltriethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, N,N-di(2-aminoethyl)-3-aminopropyltrimethoxysilane, N,N-di(2-aminoethyl)-3-aminopropyltriethoxysilane, N-[N'-(2-aminoethyl)-2-aminoethyl)]-3-aminopropyltrimethoxysilane, N-[N'-(2-aminoethyl)-2-aminoethyl)]-3-aminopropyltriethoxysilane, N-methyl-3-aminopropyltrimethoxysilane, N-methyl-3-aminopropyltriethoxysilane, N-(n-butyl)-3-aminopropyltrimethoxysilane, N-(n-butyl)-3-amino-propyltriethoxysil ane, N-cyclohexyl-3-aminopropyltrimethoxysilane, N-cyclohexyl-3-aminopropyltriethoxysilane, N-phenyl-3-aminopropyltrimethoxysilane, 3-aminopropylmethyldimethoxysilane, 3-aminopropylmethyldiethoxysilane, bis(3-trimethoxysilylpropyl)amine, and bis(3-triethoxysilylpropyl)amine.

4. The composition as clamed in any of claims 1 to 3, containing from 0.25 to 40% by weight of component (i), calculated as SiO₂ and based on the overall makeup of the composition.

5. The composition as claimed in any of claims 1 to 4, comprising water, methanol, ethanol, isopropanol, butanol, methoxypropanol, butylglycol or a mixture of at least two of the aforementioned solvents/diluents.

6. The composition as claimed in any of claims 1 to 5, comprising at least one corrosion inhibitor.

7. The composition as claimed in any of claims 1 to 6, comprising at least one organic resin.

8. The composition as claimed in any of claims 1 to 7, comprising at least one polymer.

9. A process for preparing a composition of the invention for coating metal to protect against corrosion, as claimed in any of claims 1 to 8, which comprises
- in the first step producing a sol from at least one alkoxysilane in a conventional manner, where the sol is obtainable by controlled hydrolysis involving at least one alkoxysilane, acid, water, and optionally alcohol, which corresponds to the alkoxy group of the alkoxysilane employed,
- in the second step adding to the sol from the first step at least one aminoalkyl-functional alkoxysilane in an amount of from 0.01 to 1.0 % by weight, calculated as the particular aminoalkylalkoxysilane employed and based on the SiO₂ content of the sol that is used, and further adding, if desired, a diluent and, if desired, water.

10. The process as claimed in claim 9, in the second step of which water is used in an amount of from 0.001 to 100 parts by weight per 100 parts by weight of sol from the first step.

11. The process as claimed in claim 9 or 10, in the second step of which at least one solvent/diluent from the group consisting of methanol, ethanol, isopropanol, butanol, methoxypropanol, and butylglycol is used in an amount of from 0.001 to 10 000 parts by weight per 100 parts by weight of sol from the first step.

12. The process as claimed in any of claims 9 to 11, wherein the product mixture obtained in the second step is additionally reacted at a temperature in the range from 10 to 60°C and for from 1 minute to 24 hours with thorough mixing.

13. The use of a composition as claimed in any of claims 1 to 8 or of a composition obtained by a process as claimed in any of claims 9 to 12 as an anti-corrosion composition for a metal from the group consisting of aluminum, aluminum alloys, magnesium, magnesium alloys, zinc, zinc alloys, titanium, titanium alloys, iron, iron alloys, galvanized iron sheet, galvanized iron alloy, tin, tin alloys, copper, copper alloys, and silver and silver alloys.

14. Method for the use of a composition as claimed in any of claims 1 to 8 or of a composition obtained by a process as claimed in any of claims 9 to 12 which comprises applying the composition to an optionally cleaned and/or pretreated metal surface, drying and/or curing the applied film, and, if desired, applying one or more paint and/or polymer layers to the coating thus obtained.

15. Method for the use of a composition as claimed in claim 14 by applying the composition to an optionally cleaned and/or pretreated metal surface, drying and/or curing it, applying to the anti-corrosion layer thus produced a silane-based adhesion promoter, drying the applied adhesion promoter, and applying to the coating thus obtained one or more paint and/or polymer layers.

16. Method for the use of a composition as claimed in any of claims 1 to 8 or of a composition obtained by a process as claimed in any of claims 9 to 12 which comprises applying the composition to an optionally pretreated metal surface, drying and/or curing it, and applying to the film thus produced a fluoroalkyl-functional silicon compound.

17. The use of a composition as claimed in any of claims 1 to 8 or of a composition obtained by a process as claimed in any of claims 9 to 12 in automobile construction, in mechanical engineering, in shipbuilding, in aircraft construction, or for house construction components.

## Patentansprüche

1. Mittel zur Beschichtung von Metallen zum Schutz vor Korrosion, welches
(i) ein auf Siliciumverbindungen basierendes Sol, wobei das Sol durch gezielte Hydrolyse mit mindestens einem Alkoxysilan, Säure, Wasser und gegebenenfalls einem zur Alkoxygrupe des eingestzten Alkoxysilans korrespondierenden Alkohol erhältlich ist,
(ii) mindestens ein aminoalkylfunktionelles Alkoxysilan und/oder
(iii) mindestens ein Umsetzungsprodukt der Komponenten (i) und (ii) enthält, wobei der Gehalt an aminoalkylfunktioneller Silankomponente aus (ii) und (iii) in Summe 0,01 bis 1,0 Gew.-% beträgt, gerechnet als das jeweils eingesetzte Aminoalkylalkoxysilan und bezogen auf den SiO₂-Gehalt des Sols (i), bevor irgendeine Reaktion zwischen (i) und (ii) stattgefunden hat oder bevor das Sol mit den anderen Verbindungen (ii) oder (iii) zusammengegeben wurde.

2. Mittel nach Anspruch 1, enthaltend 0,02 bis 0,08 Gew.-% aminoalkylfunktionelle Silankomponente aus (ii) und (iii), gerechnet als das jeweils eingesetzte Aminoalkylalkoxysilan und bezogen auf den SiO₂-Gehalt des Sols gemäß (i), bevor irgendeine Reaktion zwischen (i) und (ii) stattgefunden hat oder bevor das Sol mit den anderen Verbindungen (ii) oder (iii) zusammengegeben wurde.

3. Mittel nach Anspruch 1 oder 2, enthaltend mindestens ein aminoalkylfunktionelles Alkoxysilan aus der Reihe 3-Aminopropyltrimethoxysilan, 3-Aminopropyltriethoxysilan, N-(2-Aminoethyl)-3-aminopropyltrimethoxysilan, N-(2-Aminoethyl)-3-aminopropyltriethoxysilan, N-(2-Aminoethyl)-3-aminopropyl-methyldimethoxysilan, N-(2-Aminoethyl)-3-aminopropyl-methyldiethoxysilan, N,N-Di(2-Aminoethyl)-3-aminopropyltri-methoxysilan, N,N-Di(2-Aminoethyl)-3-aminopropyltriethoxysilan, N-[N'-(2-Aminoethyl)-2-aminoethyl)]-3-aminopropyltrimethoxysilan, N-[N'-(2-Aminoethyl)-2-aminoethyl)]-3-aminopropyltriethoxysilan, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-Cyclohexyl-3-aminopropyltrimethoxysilan, N-Cyclohexyl-3-aminopropyltriethoxysilan, N-Phenyl-3-aminopropyltrimethoxysilan, 3-Aminopropyl-methyldimethoxysilan, 3-Aminopropyl-methyldiethoxysilan, Bis(3-trimethoxysilylpropyl)amin, Bis(3-triethoxysilylpropyl)amin.

4. Mittel nach einem der Ansprüche 1 bis 3, enthaltend 0,25 bis 40 Gew.-% Komponente (i), gerechnet als SiO₂ und bezogen auf die Gesamtzusammensetzung des Mittels.

5. Mittel nach einem der Ansprüche 1 bis 4, enthaltend Wasser, Methanol, Ethanol, Isopropanol, Butanol, Methoxypropanol, Butylglykol oder ein Gemisch aus mindestens zwei der zuvor genannten Löse- bzw. Verdünnungsmittel.

6. Mittel nach einem der Ansprüche 1 bis 5, enthaltend mindestens einen Korrosionsinhibitor.

7. Mittel nach einem der Ansprüche 1 bis 6, enthaltend mindestens ein organisches Harz.

8. Mittel nach einem der Ansprüche 1 bis 7, enthaltend mindestens ein Polymer.

9. Verfahren zur Herstellung eines Mittels zur Beschichtung von Metall zum Schutz vor Korrosion nach einem der Ansprüche 1 bis 8, bei dem man
- im ersten Schritt aus mindestens einem Alkoxysilan in an sich bekannter Weise ein Sol erzeugt, wobei das Sol durch gezielte Hydrolyse mit mindestens einem Alkoxysilan, Säure, Wasser und gegebenenfalls einem zur Alkoxygruppe des eingesetzten Alkoxysilans korrespondierenden Alkohol erhältlich ist,
- im zweiten Schritt dem Sol aus dem ersten Schritt mindestens ein aminoalkylfunktionelles Alkoxysilan in einer Menge von 0,01 bis 1,0 Gew.-%, gerechnet als das jeweils eingesetzte Aminoalkylalkoxysilan und bezogen auf den SiO₂-Gehalt des eingesetzten Sols, gegebenenfalls ein Verdünnungsmittel und und weiter gegebenenfalls Wasser zusetzt.

10. Verfahren nach Anspruch 9, bei dem man im zweiten Schritt Wasser in einer Menge von 0,001 bis 100 Gew.-Teilen pro 100 Gew.-Teile Sol aus dem ersten Schritt einsetzt.

11. Verfahren nach Anspruch 9 oder 10, bei dem man im zweiten Schritt mindestens ein Löse- bzw. Verdünnungsmittel aus der Reihe Methanol, Ethanol, Isopropanol, Butanol, Methoxypropanol, Butylglykol in einer Menge von 0,001 bis 10 000 Gew.-Teilen pro 100 Gew.-Teile Sol aus dem ersten Schritt einsetzt.

12. Verfahren nach einem der Ansprüche 9 bis 11, bei dem man das im zweiten Schritt erhaltene Produktgemisch zusätzlich bei einer Temperatur im Bereich von 10 bis 60°C und über 1 Minute bis 24 Stunden unter guter Durchmischung reagieren lässt.

13. Verwendung eines Mittels nach einem der Ansprüche 1 bis 8 oder eines Mittels, erhalten durch ein Verfahren nach einem der Ansprüche 9 bis 12, als Korrosionsschutzmittel für ein Metall aus der Reihe Aluminium, Aluminiumlegierungen, Magnesium, Magnesiumlegierungen, Zink, Zinklegierungen, Titan, Titanlegierungen, Eisen, Eisenlegierungen, verzinktes Eisenblech, verzinkte Eisenlegierung, Zinn, Zinnlegierungen, Kupfer, Kupferlegierungen, Silber, Silberlegierungen.

14. Verwendung eines Mittels nach einem der Ansprüche 1 bis 8 oder eines Mittels, erhalten durch ein Verfahren nach einem der Ansprüche 9 bis 12, bei der man das Mittel auf eine gegebenenfalls gereinigte bzw. vorbehandelte Metalloberfläche aufbringt, die aufgebrachte Schicht trocknet bzw. aushärtet und gegebenenfalls auf die so erhaltene Beschichtung eine oder mehrere Lack- und/oder Kunststoffschichten aufbringt.

15. Verwendung eines Mittels nach Anspruch 14, indem man das Mittel auf eine gegebenenfalls gereinigte bzw. vorbehandelte Metalloberfläche aufbringt, trocknet bzw. aushärtet, auf die so erzeugte Korrosionsschutzschicht einen Haftvermittler auf Silanbasis aufbringt, den aufgebrachten Haftvermittler trocknet und auf die so erhaltene Beschichtung eine oder mehrere Lack- und/oder Kunststoffschichten aufbringt.

16. Verwendung eines Mittels nach einem der Ansprüche 1 bis 8 oder eines Mittels, erhalten durch ein Verfahren nach einem der Ansprüche 9 bis 12, bei dem man das Mittel auf eine gegebenenfalls vorbehandelte Metalloberfläche aufbringt, trocknet bzw. aushärtet und auf die so erzeugte Schicht eine fluoralkylfunktionelle Siliciumverbindung aufbringt.

17. Verwendung eines Mittels nach einem der Ansprüche 1 bis 8 oder eines Mittels, erhalten durch ein Verfahren nach einem der Ansprüche 9 bis 12, im Automobilbau, im Maschinenbau, im Schiffsbau, im Flugzeugbau oder für Teile zum Hausbau.

## Revendications

1. Composition de revêtement de métaux pour la protection contre la corrosion, comprenant
(i) un sol à base de composés de silicium, le sol pouvant être obtenu par hydrolyse contrôlée dans laquelle entrent en jeu au moins un alkoxysilane, un acide, de l'eau, et éventuellement un alcool, qui correspond au groupe alkoxy de l'alkoxysilane utilisé,
(ii) au moins un alkoxysilane à fonctionnalité aminoalkyle et/ou
(iii)au moins un produit réactionnel des composants (i) et (ii),
la quantité de composant silane à fonctionnalité aminoalkyle provenant de (ii) et (iii) étant au total de 0,01 à 1,0 % en poids, calculée sous la forme de l'aminoalkylalkoxysilane particulier qui est utilisé et relativement à la teneur en SiO₂ du sol (i) avant qu'une réaction quelconque entre (i) et (ii) n'ait eu lieu ou avant que le sol n'ait été combiné avec les autres composés (ii) ou (iii).

2. Composition selon la revendication 1, contenant une quantité de 0,02 à 0,08 % en poids de composant silane à fonctionnalité aminoalkyle provenant de (ii) et (iii), calculée sous la forme de l'aminoalkylalkoxysilane particulier qui est utilisé et relativement à la teneur en SiO₂ du sol (i) avant qu'une réaction quelconque entre (i) et (ii) n'ait eu lieu ou avant que le sol n'ait été combiné avec les autres composés (ii) ou (iii).

3. Composition selon la revendication 1 ou 2, comprenant au moins un alkoxysilane à fonctionnalité aminoalkyle provenant du groupe constitué du 3-aminopropyltriméthoxysilane, du 3-aminopropyltriéthoxysilane, du N-(2-aminoéthyl)-3-aminopropyltriméthoxysilane, du N-(2-aminoéthyl)-3-aminopropyltriéthoxysilane, du N-(2-aminoéthyl)-3-aminopropylméthyldiméthoxysilane, du N-(2-aminoéthyl)-3-aminopropylméthyldiéthoxysilane, du N,N-di(2-aminoéthyl)-3-aminopropyltriméthoxysilane, du N,N-di(2-aminoéthyl)-3-aminopropyltriéthoxysilane, du N-[N'-(2-aminoéthyl)-2-aminoéthyl)]-3-aminopropyltriméthoxysilane, du N-[N'-(2-aminoéthyl)-2-aminoéthyl)]-3-aminopropyltriéthoxysilane, du N-méthyl-3-aminopropyltriméthoxysilane, du N-méthyl-3-aminopropyltriéthoxysilane, du N-(n-butyl)-3-aminopropyltriméthoxysilane, du N-(n-butyl)-3-aminopropyltriéthoxysilane, du N-cyclohexyl-3-aminopropyltriméthoxysilane, du N-cyclohexyl-3-aminopropyltriéthoxysilane, du N-phényl-3-aminopropyltriméthoxysilane, du 3-aminopropylméthyldiméthoxysilane, du 3-aminopropylméthyldiéthoxysilane, de la bis(3-triméthoxysilylpropyl)amine, et de la bis(3-triéthoxysilylpropyl)amine.

4. Composition selon l'une quelconque des revendications 1 à 3, contenant une quantité de 0,25 à 40 % en poids du composant (i), calculée sous forme de SiO₂ et relativement à l'ensemble des éléments constitutifs de la composition.

5. Composition selon l'une quelconque des revendications 1 à 4, comprenant de l'eau, du méthanol, de l'éthanol, de l'isopropanol, du butanol, du méthoxypropanol, du butylglycol ou un mélange d'au moins deux des solvants/diluants susmentionnés.

6. Composition selon l'une quelconque des revendications 1 à 5, comprenant au moins un inhibiteur de corrosion.

7. Composition selon l'une quelconque des revendications 1 à 6, comprenant au moins une résine organique.

8. Composition selon l'une quelconque des revendications 1 à 7, comprenant au moins un polymère.

9. Procédé de préparation d'une composition selon l'invention pour le revêtement d'un métal pour protéger contre la corrosion, selon l'une quelconque des revendications 1 à 8, lequel comprend
- durant la première étape, la production d'un sol à partir d'au moins un alkoxysilane par une méthode conventionnelle, le sol pouvant être obtenu par hydrolyse contrôlée dans laquelle entrent en jeu au moins un alkoxysilane, un acide, de l'eau, et éventuellement un alcool, qui correspond au groupe alkoxy de l'alkoxysilane qui est utilisé,
- durant la deuxième étape, l'addition au sol provenant de la première étape d'au moins un alkoxysilane à fonctionnalité aminoalkyle dans une quantité de 0,01 à 1,0 % en poids, calculée sous la forme de l'aminoalkylalkoxysilane particulier qui est utilisé et relativement à la teneur en SiO₂ du sol qui est utilisé, et en ajoutant en outre, si on le souhaite, un diluant et, si on le souhaite, de l'eau.

10. Procédé selon la revendication 9, durant la deuxième étape duquel de l'eau est utilisée dans une quantité de 0,001 à 100 parties pondérales pour 100 parties pondérales du sol provenant de la première étape.

11. Procédé selon la revendication 9 ou 10, durant la deuxième étape duquel au moins un solvant/diluant provenant du groupe constitué du méthanol, de l'éthanol, de l'isopropanol, du butanol, du méthoxypropanol et du butylglycol est utilisé dans une quantité de 0,001 à 10 000 parties pondérales pour 100 parties pondérales du sol provenant de la première étape.

12. Procédé selon l'une quelconque des revendications 9 à 11, dans lequel on fait en outre réagir le mélange de produits obtenu durant la deuxième étape à une température de 10 à 60 °C et pendant une période de 1 minute à 24 heures tout en mélangeant soigneusement.

13. Utilisation d'une composition selon l'une quelconque des revendications 1 à 8 ou d'une composition obtenue par un procédé selon l'une quelconque des revendications 9 à 12 comme composition anticorrosion pour un métal du groupe constitué de l'aluminium, des alliages d'aluminium, du magnésium, des alliages de magnésium, du zinc, des alliages de zinc, du titane, des alliages de titane, du fer, des alliages de fer, de la tôle de fer galvanisé, de l'alliage de fer galvanisé, de l'étain, des alliages d'étain, du cuivre, des alliages de cuivre, et de l'argent et des alliages d'argent.

14. Procédé d'utilisation d'une composition selon l'une quelconque des revendications 1 à 8 ou d'une composition obtenue par un procédé selon l'une quelconque des revendications 9 à 12, lequel comprend l'application de la composition sur une surface métallique éventuellement nettoyée et/ou prétraitée, le séchage et/ou le durcissement du film appliqué, et, si on le souhaite, l'application d'une ou plusieurs couches de peinture et/ou de polymère sur le revêtement ainsi obtenu.

15. Procédé d'utilisation d'une composition selon la revendication 14 par application de la composition sur une surface métallique éventuellement nettoyée et/ou prétraitée, le séchage et/ou le durcissement de celle-ci, l'application sur la couche anticorrosion ainsi produite d'un promoteur d'adhésion à base de silane, le séchage du promoteur d'adhésion appliqué, et l'application sur le revêtement ainsi obtenu d'une ou plusieurs couches de peinture et/ou de polymère.

16. Procédé d'utilisation d'une composition selon l'une quelconque des revendications 1 à 8 ou d'une composition obtenue par un procédé selon l'une quelconque des revendications 9 à 12, lequel comprend l'application de la composition sur une surface métallique éventuellement prétraitée, le séchage et/ou le durcissement de celle-ci, et l'application sur le film ainsi produit d'un composé de silicium à fonctionnalité fluoroalkyle.

17. Utilisation d'une composition selon l'une quelconque des revendications 1 à 8 ou d'une composition obtenue par un procédé selon l'une quelconque des revendications 9 à 12 dans la construction automobile, dans l'ingénierie mécanique, dans la construction navale, dans la construction aéronautique, ou dans des composants de construction de bâtiments d'habitation.
